# EUROPEAN PATENT SPECIFICATION

(11) **EP 4 109 839 B1**
(45) Date of publication and mention of the grant of the patent: **09.12.2026**
(21) Application number: 20920074.0
(22) Date of filing: 26.04.2020
(51) Int. Cl.: H04L 9/32, H04L 9/40, H04W 12/48, H04W 76/10, G06F 21/44, G06F 21/51

(54) **SESSION CREATION METHOD AND RELATED DEVICE**
SITZUNGSERZEUGUNGSVERFAHREN UND ZUGEHÖRIGE VORRICHTUNG
PROCÉDÉ DE CRÉATION DE SESSION ET DISPOSITIF ASSOCIÉ

(30) Priority: 21.02.2020 CN 202010110499
(43) Date of publication of application: 28.12.2022
(73) Proprietor: Beijing Unisoc Communications Technology Co., Ltd., Beijing 100083 (CN)
(72) Inventor: FU, Zhiwei, Beijing 100000 (CN); BAI, Yifan, Beijing 100000 (CN)
(74) Representative: Lavoix
(86) International application number: PCT/CN2020/087044
(87) International publication number: WO 2021/164125

(56) References cited:
- WO-A1-2019/028837
- CN-A- 110 149 670
- CN-A- 110 474 840
- CN-A- 110 474 840
- US-A1- 2014 298 420
- US-A1- 2018 324 577
- US-A1- 2019 268 835
- US-A1- 2019 394 279
- US-A1- 2020 053 622
- ERICSSON: "Clarifications on the OSId and AppId in the URSP rule", vol. SA WG2, no. Electronic meeting; 20200224 - 20200227, 18 February 2020 (2020-02-18), XP051855424, Retrieved from the Internet <URL:https://ftp.3gpp.org/tsg_sa/WG2_Arch/TSGS2_137e_Electronic/Docs/S2-2002033.zip S2-2002033_Application Id in URSP rule.docx> [retrieved on 20200218]
- HUAWEI ET AL: "Correction for URSP rule parameter traffic descriptor", vol. SA WG2, no. West Palm Beach, USA; 20181126 - 20181130, 4 December 2018 (2018-12-04), XP051491239, Retrieved from the Internet <URL:http://www.3gpp.org/ftp/tsg%5Fsa/TSG%5FSA/TSGS%5F82/Docs/SP%2D181087%2Ezip> [retrieved on 20181204]
- ZTE: "Clarification on Policy Control Request Triggers", 3GPP DRAFT; S2-1911398, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Reno, USA; 20191118 - 20191122, 8 November 2019 (2019-11-08), Mobile Competence Centre ; 650, route des Lucioles ; F-06921 Sophia-Antipolis Cedex ; France, XP051821490

## Description

### TECHNICAL FIELD

This application relates to the field of communication technologies, and particularly to a method for session creation and related equipment.

### BACKGROUND

In an existing communication system, uplink data is transmitted through session creation. Application descriptors are defined in a Traffic descriptor in a user equipment (UE) route selection policy (URSP) rule of 3^{rd} generation partnership project (3GPP) protocol. Application descriptors can match 5G core (5GC) network configuration. However, existing application descriptors may be tampered with or forged, resulting in confusion in session creation, thereby affecting network reliability.

US2020053622A1 discloses a method for UE route selection policy (URSP) rule matching. URSP is used by a UE to determine if a detected application can be associated to an established PDU session, can be offloaded to non-3GPP access outside a PDU session, or can trigger the establishment of a new PDU session. The UE first finds a non-default URSP rule with a matching traffic descriptor to the application. When the UE fails to find existing PDU session or setup new PDU session with any or the route selection descriptors of the non-default URSP rule, the UE moves to another non-default URSP rule, if any, and try the matching. If all non-default URSP rules cannot be matched with the application, then the UE tries the default URSP rule, which includes a match-all traffic descriptor.

US2014298420A1 discloses a method of managing access to enterprise resources. An access manager may operate at a mobile device to validate a mobile application installed at that mobile device. If the access manager does not successfully validate the mobile application, the access manager may prevent the mobile application from accessing computing resource. If the access manager does successfully validate the mobile application, then the access manager may identify the mobile application as a trusted mobile application. The access manager may thus permit the trusted mobile application to access the computing resource.

"Clarifications on the OSId and Appld in the URSP rule" discloses the URSP rule. Each URSP rule contains a Traffic descriptor (containing one or more components described in Table 6.6.2.1-2) that determines when the rule is applicable. A URSP rule is determined to be applicable when every component in the Traffic descriptor matches the corresponding information from the application.

"Correction for URSP rule parameter traffic descriptor" discloses the ANDSP and URSP. The ANDSP and URSP may be pre-configured in the UE or may be provisioned to UE from PCF. The pre-configured policy shall be applied by the UE only when it has not received the same type of policy from PCF.

### SUMMARY

Aspects of the invention are set out in the appended claims.

By implementing technical solutions provided in implementations of the disclosure, the signing certificate of the first application or the digital fingerprint of the signing certificate is read when creating a session, the UE matches the signing certificate of the first application or the digital fingerprint of the signing certificate with the application descriptors in the URSP rule distributed by the network side, and the UE creates the session for the first application. The application descriptors are managed by an operator, so that the application descriptors are prevented from being tampered with by other applications or programs, which can ensure security of the application descriptors and ensure network stability.

Moreover, the technical solutions of the disclosure do not depend on hardware. An application developer can register with the operator, and the operator can manage and control a signing certificate of an application as application descriptors, which can realize authorization management of the application by the operator, and provide users with differentiated value-added services and technical support. Implementation complexity of a terminal system is relatively low, and the existing certificate signing mechanism of a smart device can be used directly. A risk of tampering or forgery of the application descriptors can be eliminated at application distribution and installation stages. Before an application uses a data service, application descriptors with authentication guarantee can be realized without accessing a network.

### BRIEF DESCRIPTION OF THE DRAWINGS

In order to describe technical solutions of implementations of the disclosure more clearly, the following will give a brief description of accompanying drawings used for describing the implementations. Apparently, accompanying drawings described below are merely some implementations. Those of ordinary skill in the art can also obtain other accompanying drawings based on the accompanying drawings described below without creative efforts.
FIG. 1 is a schematic structural diagram illustrating a communication system provided in implementations of the disclosure.
FIG. 2 illustrates a transmission method for session creation provided in implementations of the disclosure.
FIG. 3 illustrates a transmission method for session communication provided in implementations of the disclosure.
FIG. 4 illustrates a transmission method for session creation provided in implementations of the disclosure.
FIG. 5 illustrates a transmission method for a user equipment provided in implementations of the disclosure.
FIG. 6 is a schematic structural diagram illustrating a network equipment provided in implementations of the disclosure.
FIG. 7 is a schematic structural diagram illustrating an equipment provided in implementations of the disclosure.

### DETAILED DESCRIPTION

The terms used in implementations of the disclosure are merely used to explain specific implementations of the disclosure, and are not intended to limit the disclosure. The terms "first", "second", "third", "fourth", and the like used in the specification, the claims, and the accompany drawings of the disclosure are used to distinguish different objects rather than to describe a particular order. Furthermore, the terms "include", "comprise", and "have" as well as variations thereof are intended to cover non-exclusive inclusion.

Hereinafter, implementations of the disclosure will be described with reference to accompanying drawings intended for the implementations.

The term "and/or" of the disclosure is merely used to describe an association relationship of associated objects, and indicates that there can be three relationships. For example, *"A* and/or *B"* means that: *A* alone, *both A* and *B,* or *B* alone. In addition, the character "/" herein generally indicates that associated objects before and after the character are in an "or" relationship.

The terms "a plurality of" or "multiple" appearing in implementations of the disclosure means two or more. The descriptions of the "first", "second", etc. appearing in implementations of the disclosure are merely used for illustration and distinguishing described objects, and do not indicate an order, nor do they indicate a special limitation on the number of devices of implementations of the disclosure, which should not constitute any limitation to implementations of the disclosure. The "connection" appearing in implementations of the disclosure refers to various connection modes such as direct connection or indirect connection, to realize communication between devices, which is not limited in implementations of the disclosure.

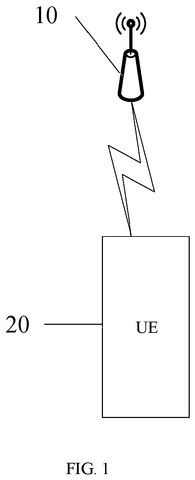

Referring to FIG. 1, FIG. 1 is a schematic structural diagram illustrating a communication system provided in implementations of the disclosure. The communication system includes a base station 10 and a user equipment (UE) 20, where the base station and the UE are in wireless communication connection. The wireless communication connection includes, but is not limited to, long term evolution (LTE) connection, and new radio (NR) connection. In practice, there may also be other connection modes, and the disclosure does not limit the mode of the connection. The base station may be an eNodeB, an NR base station, or an access point (AP), etc.

The terminal in implementations of the disclosure may refer to various forms of UEs, access terminals, subscriber units, subscriber stations, mobile stations (MS), remote stations, remote terminals, and mobile equipment, user terminals, terminal equipment, wireless communication equipment, user agents, or user devices. The terminal equipment may also be a cellular telephone, a cordless telephone, a session initiation protocol (SIP) telephone, a wireless local loop (WLL) station, a personal digital assistant (PDA), a handheld device with a wireless communication function, a computing device, other processing devices coupled with a wireless modem, an in-vehicle device, a wearable device, terminal equipment in a future 5G network or a future evolved public land mobile network (PLMN), etc., which is not limited in implementations of the disclosure.

A 5G core (5GC) network requires a terminal to perform route matching and selection for uplink transmission data according to a UE route selection policy (URSP) rule distributed by a network. According to the URSP rule, an established protocol data unit (PDU) session can be multiplexed, or a new PDU session can be established. Application descriptors are defined in a Traffic descriptor of the URSP rule of 3^{rd} generation partnership project (3GPP) protocol, and the terminal matches an uplink data route through an application identifier according to the URSP rule distributed by the network. Application identifiers in the URSP rule can be used by a network operator to provide differentiated quality of service (QoS) for different applications, thereby generating differentiated traffic control policies or payment services. The 3GPP protocol defines a URSP rule and optional application descriptors, but does not specify how to allocate and obtain an application identifier (APP ID), how an operator controls the allocated APP ID of an application to match 5GC network configuration, how a terminal obtains an APP ID of an application when evaluating and selecting a URSP rule, and how to prevent an APP ID of an application from being tampered with or forged during application distribution or application installation or in a terminal operating system.

Specifically, for 3GPP network connection, different PDU sessions are created for different applications according to different technical scenarios, and different applications may have different QoS. PDU session creation is based on application descriptors (e.g., APP ID) of an application obtained by a terminal when evaluating and selecting a URSP rule. If the application descriptors of the application are forged or tampered with, confusion in session establishment may occur, which will affect network reliability.

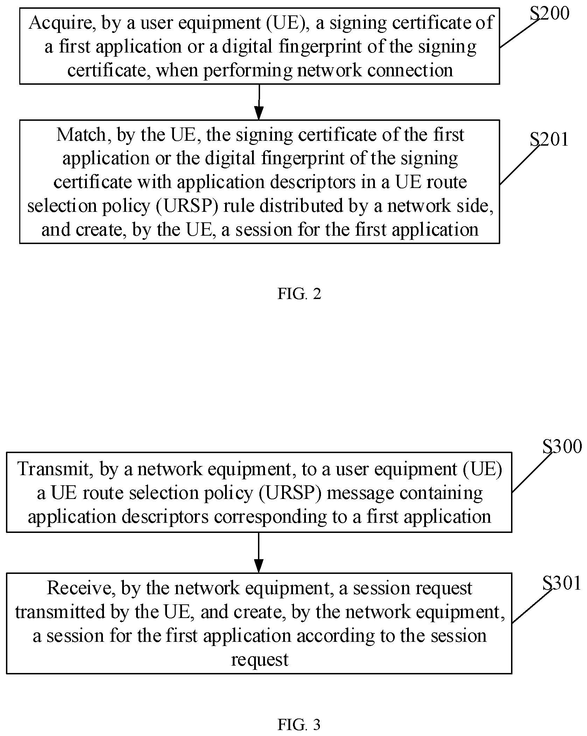

Referring to FIG. 2, FIG. 2 illustrates a method for session creation provided in implementations of the disclosure. The method is performed in the communication system illustrated in FIG. 1, and the method includes, but is not limited to, the following.

At S200, when performing network connection, UE acquires a signing certificate of a first application or a digital fingerprint of the signing certificate.

Specifically, in an optional implementation, the session is a PDU session.

Application descriptors of the disclosure may be application descriptors defined by a Traffic descriptor in 3GPP protocol.

Specifically, the application descriptors include an operating system identifier (OSId) and an operating system application identifier (OSAppId). In an optional implementation, there are multiple operating system application identifiers, which can also be represented as OSAppId(s).

At S201, the UE matches the signing certificate of the first application or the digital fingerprint of the signing certificate with application descriptors in a URSP rule distributed by a network side, and creates a session for the first application.

Specifically, in an optional implementation, the UE uses "Application descriptors1" as the application descriptors in the URSP rule for matching, and then creates or multiplexes a PDU session through user route selection.

Specifically, before the operation at S200, the method further includes the following. The UE acquires the first application, where the first application contains the signing certificate of the first application.

In an optional implementation, the UE acquires the first application locally. For example, the UE receives the first application from other devices (including but not limited to a personal computer, other UEs, etc.) in a wired or wireless manner.

In another optional implementation, the UE also acquires the first application through a network. For example, the UE transmits a request message for acquiring the first application to a network equipment, and receives an installation file or an installation package of the first application returned by the network equipment.

Specifically, the method further includes the following. The UE receives the application descriptors in the UPSP rule distributed by an operator server.

In implementations of the disclosure, the digital fingerprint of the signing certificate of the first application is a string encrypted by a one-way encryption algorithm. The one-way encryption algorithm includes, but is not limited to, a hash algorithm, an SHA-1 or SHA-256 algorithm, etc.

Specifically, in an optional implementation, on condition that the signing certificate of the first application or the digital fingerprint of the signing certificate is consistent with the application descriptors, determine that the signing certificate of the first application or the digital fingerprint of the signing certificate matches the application descriptors. On condition that the signing certificate of the first application or the digital fingerprint of the signing certificate is different from the application descriptors, determine that the signing certificate of the first application or the digital fingerprint of the signing certificate fails to match the application descriptors.

According to technical solutions of the disclosure, the signing certificate of the first application or the digital fingerprint of the signing certificate is read when creating a session, the UE matches the signing certificate of the first application or the digital fingerprint of the signing certificate with the application descriptors in the URSP rule distributed by the network side, and the UE creates the session for the first application. The application descriptors are managed by an operator, so that the application descriptors are prevented from being tampered with by other applications or programs, which can ensure security of the application descriptors and ensure network stability. Moreover, the technical solutions of the disclosure do not depend on hardware. An application developer can register with the operator, and the operator can manage and control a signing certificate of an application as application descriptors, which can realize authorization management of the application by the operator, and provide users with differentiated value-added services and technical support. Implementation complexity of a terminal system is relatively low, and the existing certificate signing mechanism of a smart device can be used directly. A risk of tampering or forgery of the application descriptors can be eliminated at application distribution and installation stages. Before an application uses a data service, application descriptors with authentication guarantee can be realized without accessing a network.

Referring to FIG. 3, FIG. 3 illustrates a method for session communication. The method is implemented in the network system illustrated in FIG. 1. The UE illustrated in FIG. 1 may be a UE of an application developer. As illustrated in FIG. 3, the method includes the following.

At S300, a network equipment transmits to a UE a URSP message containing application descriptors corresponding to a first application.

At S301, the network equipment receives a session request transmitted by the UE, and creates a session for the first application according to the session request.

Specifically, in an optional implementation, the network equipment receives a signing certificate of the first application or a digital fingerprint of the signing certificate transmitted by an application development user. The network equipment uses the signing certificate of the first application or the digital fingerprint of the signing certificate as application descriptors in a URSP rule.

According to an implementation that is an embodiment of the invention, the network equipment receives the first application transmitted by an application development user, where the first application contains a signing certificate of a developer. The network equipment obtains a network signature of the first application by re-signing the first application, where the network signature includes a network signing certificate of the first application or a digital fingerprint of the network signing certificate. The network equipment uses the network signing certificate or the digital fingerprint of the network signing certificate as application descriptors in a URSP rule.

In an unclaimed implementation, the network equipment receives a signing certificate of an application developer transmitted by an application development user. The network equipment obtains a re-signed certificate by re-signing the signing certificate. The network equipment transmits the re-signed certificate to the application development user, and indicates the application development user to carry in the first application the re-signed certificate as the signing certificate of the application developer, as application descriptors in a URSP rule.

In another unclaimed implementation, the network equipment receives a registration request transmitted by an application development user, where the registration request contains a signing certificate of the first application or a digital fingerprint of the signing certificate. The network equipment registers the signing certificate of the first application or the digital fingerprint of the signing certificate according to the registration request.

The technical solutions of the disclosure can support implementing of the method for session creation illustrated in FIG. 2, which can improve network stability.

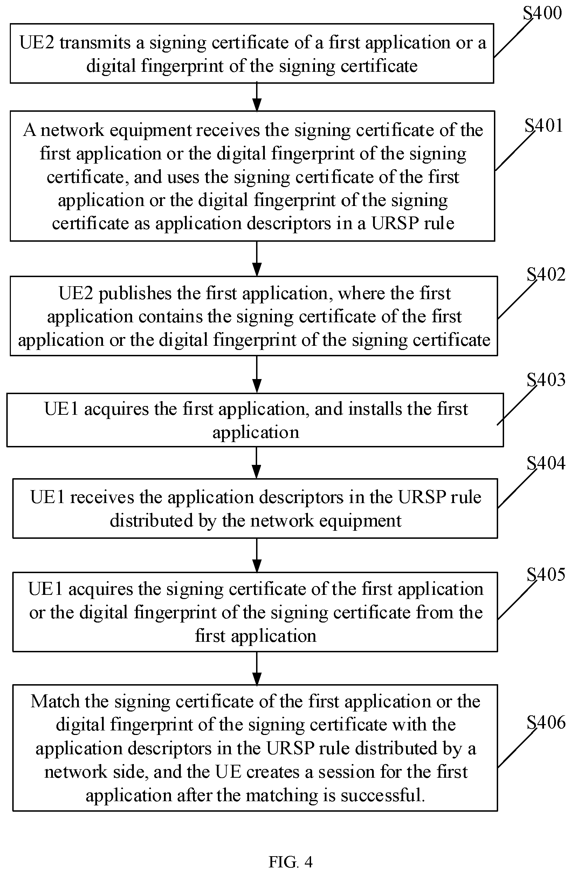

Referring to FIG. 4, FIG. 4 illustrates a method for session creation provided in implementations of the disclosure. The method is implemented under a network architecture illustrated in FIG. 1. The method involves two UEs. For convenience of description, UE1 and UE2 are depicted to distinguish the two UEs, where UE1 is a UE of a user, and UE2 is a UE of an application developer. Referring to FIG. 4, the method provided in FIG. 4 includes the following.

At S400, UE2 transmits a signing certificate of a first application or a digital fingerprint of the signing certificate.

At S401, a network equipment receives the signing certificate of the first application or the digital fingerprint of the signing certificate, and uses the signing certificate of the first application or the digital fingerprint of the signing certificate as application descriptors in a URSP rule.

At S402, UE2 publishes the first application, where the first application contains the signing certificate of the first application or the digital fingerprint of the signing certificate.

At S403, UE1 acquires the first application, and installs the first application.

At S404, UE1 receives the application descriptors in the URSP rule distributed by the network equipment.

At S405, UE1 acquires the signing certificate of the first application or the digital fingerprint of the signing certificate from the first application.

At S406, UE1 matches the signing certificate of the first application or the digital fingerprint of the signing certificate with the application descriptors in the URSP rule distributed by a network side, and after the matching is successful, UE1 creates a session for the first application.

According to technical solutions of the disclosure, the signing certificate of the first application or the digital fingerprint of the signing certificate is read when creating a session, the UE matches the signing certificate of the first application or the digital fingerprint of the signing certificate with the application descriptors in the URSP rule distributed by the network side, and the UE creates the session for the first application. The application descriptors are managed by an operator, so that the application descriptors are prevented from being tampered with by other applications or programs, which can ensure security of the application descriptors and ensure network stability. Moreover, the technical solutions of the disclosure do not depend on hardware. An application developer can register with the operator, and the operator can manage and control a signing certificate of an application as application descriptors, which can realize authorization management of the application by the operator, and provide users with differentiated value-added services and technical support. Implementation complexity of a terminal system is relatively low, and the existing certificate signing mechanism of a smart device can be used directly. A risk of tampering or forgery of the application descriptors can be eliminated at application distribution and installation stages. Before an application uses a data service, application descriptors with authentication guarantee can be realized without accessing a network.

Specifically, the operation at S401 of the implementations illustrated in FIG. 4 is according to the following. At S401-1, the network equipment obtains a network signature of the first application by re-signing the first application, where the network signature includes a network signing certificate of the first application or a digital fingerprint of the network signing certificate; and uses the network signing certificate or the digital fingerprint of the network signing certificate as application descriptors in a URSP rule.

In an unclaimed implementation, the operations at S400 and S401 of the implementations illustrated in FIG. 4 may be replaced by the following. At S400-2, the network equipment receives a signing certificate of an application developer transmitted by an application development user. At S401-2, the network equipment obtains a re-signed certificate by re-signing the signing certificate; transmits the re-signed certificate to the application development user; and indicates the application development user to carry in the first application the re-signed certificate as the signing certificate of the application developer, as application descriptors in a URSP rule.

According to the above technical solution, the application development user is signed, so that a signature of the application development user will not change as long as the application development user does not change, which can avoid performing signing and authentication multiple times when multiple applications are developed by a same development user.

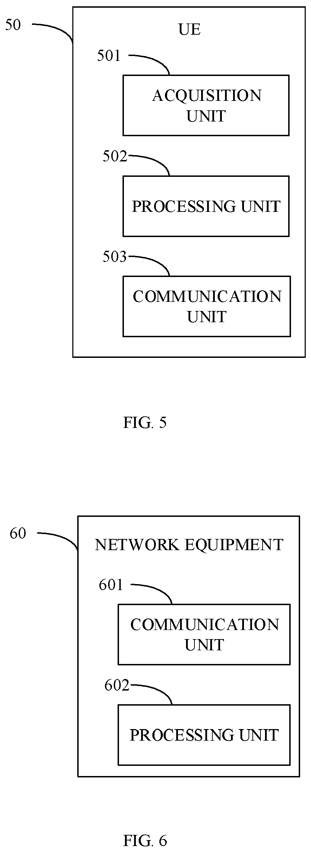

Referring to FIG. 5, FIG. 5 illustrates a UE 50. The UE includes an acquisition unit 501 and a processing unit 502. The acquisition unit 501 is configured to acquire a signing certificate of a first application or a digital fingerprint of the signing certificate when performing network connection. The processing unit 502 is configured to match the signing certificate of the first application or the digital fingerprint of the signing certificate with application descriptors in a URSP rule distributed by a network side, and create a session for the first application.

Specifically, in an optional implementation, the session is a PDU session.

Specifically, in an optional implementation, the application descriptors are application descriptors defined by a Traffic descriptor in 3GPP protocol.

Specifically, in an optional implementation, the application descriptors include an OSId and an OSAppId.

Specifically, in an optional implementation, the UE further includes a communication unit 503. The communication unit 503 is configured to receive the first application distributed, where the first application contains the signing certificate of the first application.

Specifically, in an optional implementation, the digital fingerprint of the signing certificate of the first application is a string encrypted by a one-way encryption algorithm.

Specifically, in an optional implementation, the communication unit 503 is further configured to receive the application descriptors in the UPSP rule distributed by an operator server.

Specifically, in an optional implementation, the processing unit 502 is specifically configured to: determine that the signing certificate of the first application or the digital fingerprint of the signing certificate matches the application descriptors, on condition that the signing certificate of the first application or the digital fingerprint of the signing certificate is consistent with the application descriptors; or determine that the signing certificate of the first application or the digital fingerprint of the signing certificate fails to match the application descriptors, on condition that the signing certificate of the first application or the digital fingerprint of the signing certificate is different from the application descriptors.

According to technical solutions of the disclosure, the signing certificate of the first application or the digital fingerprint of the signing certificate is read when creating a session, the UE matches the signing certificate of the first application or the digital fingerprint of the signing certificate with the application descriptors in the URSP rule distributed by the network side, and the UE creates the session for the first application. The application descriptors are managed by an operator, so that the application descriptors are prevented from being tampered with by other applications or programs, which can ensure security of the application descriptors and ensure network stability. Moreover, the technical solutions of the disclosure do not depend on hardware. An application developer can register with the operator, and the operator can manage and control a signing certificate of an application as application descriptors, which can realize authorization management of the application by the operator, and provide users with differentiated value-added services and technical support. Implementation complexity of a terminal system is relatively low, and the existing certificate signing mechanism of a smart device can be used directly. A risk of tampering or forgery of the application descriptors can be eliminated at application distribution and installation stages. Before an application uses a data service, application descriptors with authentication guarantee can be realized without accessing a network.

Referring to FIG. 6, FIG. 6 illustrates a network equipment 60. The network equipment includes a communication unit 601 and a processing unit 602. The communication unit 601 is configured to transmit to a UE a URSP message containing application descriptors corresponding to a first application, and receive a session request transmitted by the UE. The processing unit 602 is configured to create a session for the first application according to the session request.

Specifically, in an optional implementation, the communication unit 601 is further configured to receive a signing certificate of the first application or a digital fingerprint of the signing certificate transmitted by an application development user. The processing unit 602 is further configured to use the signing certificate of the first application or the digital fingerprint of the signing certificate as application descriptors in a URSP rule.

Specifically, in an optional implementation, the communication unit 601 is further configured to receive the first application transmitted by an application development user, where the first application contains a signing certificate of a developer. The processing unit 602 is further configured to obtain a network signature of the first application by re-signing the first application, where the network signature includes a network signing certificate of the first application or a digital fingerprint of the network signing certificate; and use the network signing certificate or the digital fingerprint of the network signing certificate as application descriptors in a UPSP rule.

Specifically, in an optional implementation, the communication unit 601 is further configured to receive a signing certificate of an application developer transmitted by an application development user. The processing unit 602 is further configured to obtain a re-signed certificate by re-signing the signing certificate; transmit the re-signed certificate to the application development user; and indicate the application development user to carry in the first application the re-signed certificate as the signing certificate of the application developer, as application descriptors in a UPSP rule.

Specifically, in an optional implementation, the communication unit 601 is further configured to receive a registration request transmitted by an application development user, where the registration request contains a signing certificate of the first application or a digital fingerprint of the signing certificate. The processing unit 602 is further configured to register the signing certificate of the first application or the digital fingerprint of the signing certificate according to the registration request.

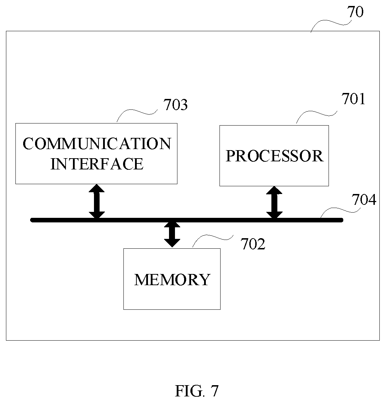

Referring to FIG. 7, FIG. 7 illustrates an equipment 70 provided in implementations of the disclosure. The equipment 70 includes a processor 701, a memory 702, and a communication interface 703. The processor 701, the memory 702, and the communication interface 703 are connected to each other via a bus 704.

The memory 702 includes, but is not limited to, a random access memory (RAM), a read-only memory (ROM), an erasable programmable ROM (EPROM), or a compact disc ROM (CD-ROM), etc. The memory 702 is configured to store related computer programs and data. The communication interface 703 is configured to receive and transmit data.

The processor 701 may be one or more central processing units (CPU). If the processor 701 is a CPU, the CPU may be a single-core CPU or a multi-core CPU.

The processor 701 of the equipment 70 is configured to read computer program codes stored in the memory 702 to perform: acquiring a signing certificate of a first application or a digital fingerprint of the signing certificate, when performing network connection; matching the signing certificate of the first application or the digital fingerprint of the signing certificate with application descriptors in a URSP rule distributed by a network side; and creating a session for the first application.

It should be noted that, for details of implementation of each of the above operations, reference can also be made to corresponding descriptions of the method implementations illustrated in FIG. 2, FIG. 3, and FIG. 4.

Implementations of the disclosure further provide a chip system. The chip system includes at least one processor, a memory, and an interface circuit. The memory, a transceiver, and the at least one processor are interconnected through a line. The memory stores computer programs which, when executed by the processor, are operable to execute method flows illustrated in FIG. 2, FIG. 3, and FIG. 4.

Implementations of the disclosure further provide a computer-readable storage medium. The computer-readable storage medium stores computer programs which, when run on a network equipment, are operable to execute method flows illustrated in FIG. 2, FIG. 3, and FIG. 4.

Implementations of the disclosure further provide a computer program product which, when run on a terminal, is operable to execute method flows illustrated in FIG. 2, FIG. 3, and FIG. 4.

Implementations of the disclosure further provide a terminal. The terminal includes a processor, a memory, a communication interface, and one or more programs. The one or more programs are stored in the memory and configured to be executed by the processor. The programs include instructions which are operable to execute the operations of the method of implementations illustrated in FIG. 2, FIG. 3, and FIG. 4.

The foregoing technical solutions of the implementations of the disclosure are mainly described from the viewpoint of execution of the method. It can be understood that, in order to implement the above functions, the electronic equipment includes hardware structures and/or software modules corresponding to the respective functions. Those skilled in the art should readily recognize that, in combination with the exemplary units and scheme steps or operations described in the implementations disclosed herein, the disclosure can be implemented in hardware or a combination of hardware and computer software. Whether a function is implemented by way of hardware or computer software driving hardware depends on the particular application and design constraints of the technical solution. Those skilled in the art may use different methods to implement the described functions for each particular application, but such implementation should not be considered as beyond the scope of the disclosure.

According to the implementations of the disclosure, functional units may be divided for the electronic equipment in accordance with the foregoing method examples. For example, functional units may be divided according to corresponding functions, and two or more functions may be integrated into one processing unit. The above-mentioned integrated unit can be implemented in the form of hardware or software functional units. It should be noted that the division of units in the implementations of the disclosure is schematic and is merely a logical function division; there may be other division manners in actual implementation.

Implementations of the disclosure further provide a computer storage medium. The computer storage medium stores computer programs for electronic data interchange. The computer programs cause a computer to execute all or part of the operations of any method described in the foregoing method implementations. The computer includes an electronic equipment.

Implementations of the disclosure further provide a computer program product. The computer program product includes a non-transitory computer-readable storage medium storing computer programs. The computer programs are operable with a computer to execute all or part of the operations of any method described in the foregoing method implementations. The computer program product may be a software installation package, and the computer includes an electronic equipment.

It is to be noted that, for the sake of simplicity, the foregoing method implementations are described as a series of action combinations, however, it will be appreciated by those skilled in the art that the disclosure is not limited by the sequence of actions described. That is because that, according to the disclosure, certain steps or operations may be performed in other order or simultaneously. Besides, it will be appreciated by those skilled in the art that the implementations described in the specification are exemplary implementations and the actions and modules involved are not necessarily essential to the disclosure.

In the foregoing implementations, the description of each implementation has its own emphasis. For the parts not described in detail in one implementation, reference may be made to related descriptions in other implementations.

In the implementations of the disclosure, it should be understood that, the device/equipment disclosed in implementations provided herein may be implemented in other manners. For example, the equipment implementations described above are merely illustrative; for instance, the division of the unit is only a logical function division and there can be other manners of division during actual implementations, for example, multiple units or assemblies may be combined or may be integrated into another system, or some features may be ignored, omitted, or not performed. In addition, coupling or communication connection between each illustrated or discussed component may be direct coupling or communication connection, or may be indirect coupling or communication among devices or units via some interfaces, and may be electrical connection or other forms of connection.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the implementations.

In addition, the functional units in various implementations of the disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the disclosure essentially, or the part of the technical solutions that contributes to the related art, or all or part of the technical solutions, may be embodied in the form of a software product which is stored in a memory and includes instructions for causing a computer device (which may be a personal computer, a server, or a network equipment and so on) to perform all or part of the operations of the method described in the various implementations of the disclosure. The memory includes various medium capable of storing program codes, such as a universal serial bus (USB), a ROM, a RAM, a removable hard disk, disk, CD, or the like.

It will be understood by those of ordinary skill in the art that all or part of the operations of various methods of the implementations described above may be accomplished by means of a program to instruct associated hardware, and the program may be stored in a computer-readable memory. The memory may include a flash memory, a ROM, a RAM, disk or CD, and so on.

## Claims

1. A method for session creation, performed by a user equipment, UE, comprising:
acquiring (S200) a signing certificate of a first application or a digital fingerprint of the signing certificate, when performing network connection;
matching (S201) the signing certificate of the first application or the digital fingerprint of the signing certificate with application descriptors in a UE route selection policy, URSP, rule distributed by a network side; and
creating (S201) a session for the first application,
**characterized in that**:
the first application contains a signing certificate of a developer,
the application descriptors in the URSP rule comprise a network signing certificate of the first application or a digital fingerprint of the network signing certificate that is comprised in a network signature of the first application, and
the network signature of the first application is obtained by re-signing by the network side the first application.

2. The method of claim 1, wherein the session is a protocol data unit, PDU, session.

3. The method of claim 1, wherein the application descriptors are application descriptors defined by a Traffic descriptor in 3rd generation partnership project, 3GPP, protocol.

4. The method of claim 1, wherein the application descriptors comprise an operating system identifier, OSId, and an operating system application identifier, OSAppId.

5. The method of claim 1 or 2, wherein before performing network connection, the method further comprises:
receiving the first application, wherein the first application contains the signing certificate of the first application.

6. The method of claim 1, wherein the digital fingerprint of the signing certificate of the first application is a string encrypted by a one-way encryption algorithm.

7. The method of claim 1, further comprising:
receiving the application descriptors in the URSP rule distributed by an operator server.

8. The method of claim 1, wherein matching the signing certificate of the first application or the digital fingerprint of the signing certificate with the application descriptors in the URSP rule distributed by the network side comprises:
determining that the signing certificate of the first application or the digital fingerprint of the signing certificate matches the application descriptors, on condition that the signing certificate of the first application or the digital fingerprint of the signing certificate is consistent with the application descriptors; or
determining that the signing certificate of the first application or the digital fingerprint of the signing certificate fails to match the application descriptors, on condition that the signing certificate of the first application or the digital fingerprint of the signing certificate is different from the application descriptors.

9. A user equipment, UE (50), comprising:
an acquisition unit (501), configured to acquire a signing certificate of a first application or a digital fingerprint of the signing certificate when performing network connection; and
a processing unit (502), configured to:
match the signing certificate of the first application or the digital fingerprint of the signing certificate with application descriptors in a UE route selection policy, URSP, rule distributed by a network side, and
create a session for the first application,
**characterized in that**:
the first application contains a signing certificate of a developer,
the application descriptors in the URSP rule comprise a network signing certificate of the first application or a digital fingerprint of the network signing certificate that is comprised in a network signature of the first application, and
the network signature of the first application is obtained by re-signing by the network side the first application.

10. The UE of claim 9, further comprising:
a communication unit (503), configured to receive the first application, wherein the first application contains the signing certificate of the first application.

11. The UE of claim 9, further comprising:
a communication unit (503), configured to receive the application descriptors in the URSP rule distributed by an operator server.

12. The UE of claim 9, wherein the processing unit is configured to:
determine that the signing certificate of the first application or the digital fingerprint of the signing certificate matches the application descriptors, on condition that the signing certificate of the first application or the digital fingerprint of the signing certificate is consistent with the application descriptors; or
determine that the signing certificate of the first application or the digital fingerprint of the signing certificate fails to match the application descriptors, on condition that the signing certificate of the first application or the digital fingerprint of the signing certificate is different from the application descriptors.

13. The UE of claim 9, wherein the application descriptors comprise an operating system identifier, OSId, and an operating system application identifier, OSAppId.

14. An equipment (70), comprising:
a processor (701);
a memory (702);
a communication interface (703); and
one or more programs, stored in the memory and configured to be executed by the processor;
the programs comprising instructions which are operable to execute the operations of the method of any of claims 1 to 8.

15. A computer-readable storage medium storing computer programs for electronic data interchange, the computer programs being operable with a computer to execute the method of any of claims 1 to 8.

## Patentansprüche

1. Ein Verfahren zur Sitzungserstellung, durchgeführt von einem Benutzergerät, UE, umfassend:
Erlangen (S200) eines Signierzertifikats einer ersten Anwendung oder eines digitalen Fingerabdrucks des Signierzertifikats beim Durchführen einer Netzverbindung;
Abgleichen (S201) des Signierzertifikats der ersten Anwendung oder des digitalen Fingerabdrucks des Signierzertifikats mit Anwendungsdeskriptoren in einer von einer Netzseite verteilten Regel einer Benutzergerät-Routenauswahlrichtlinie, URSP-Regel; und
Erstellen (S201) einer Sitzung für die erste Anwendung,
**dadurch gekennzeichnet, dass**:
die erste Anwendung ein Signierzertifikat eines Entwicklers enthält,
die Anwendungsdeskriptoren in der URSP-Regel ein Netzwerksignierzertifikat der ersten Anwendung oder einen digitalen Fingerabdruck des Netzwerksignierzertifikats umfassen, das in einer Netzwerksignatur der ersten Anwendung enthalten ist, und
die Netzwerksignatur der ersten Anwendung durch erneutes Signieren der ersten Anwendung durch die Netzseiteerhalten wird.

2. Das Verfahren nach Anspruch 1, wobei die Sitzung eine Protokolldateneinheits-(PDU-)Sitzung ist.

3. Das Verfahren nach Anspruch 1, wobei die Anwendungsdeskriptoren Anwendungsdeskriptoren sind, die durch einen Datenverkehrsdeskriptor in einem Protokoll des Partnerschaftsprojekts der 3. Generation, 3GPP, definiert sind.

4. Das Verfahren nach Anspruch 1, wobei die Anwendungsdeskriptoren eine Betriebssystemkennung, OSId, und eine Betriebssystem-Anwendungskennung, OSAppld, umfassen.

5. Das Verfahren nach Anspruch 1 oder 2, wobei das Verfahren vor dem Durchführen einer Netzverbindung ferner umfasst:
Empfangen der ersten Anwendung, wobei die erste Anwendung das Signierzertifikat der ersten Anwendung enthält.

6. Das Verfahren nach Anspruch 1, wobei der digitale Fingerabdruck des Signierzertifikats der ersten Anwendung eine durch einen Einweg-Verschlüsselungsalgorithmus verschlüsselte Zeichenfolge ist.

7. Das Verfahren nach Anspruch 1, ferner umfassend:
Empfangen der Anwendungsdeskriptoren in der von einem Betreiber-Server verteilten URSP-Regel.

8. Das Verfahren nach Anspruch 1, wobei das Abgleichen des Signierzertifikats der ersten Anwendung oder des digitalen Fingerabdrucks des Signierzertifikats mit den Anwendungsdeskriptoren in der von der Netzseite verteilten URSP-Regel umfasst:
Bestimmen, dass das Signierzertifikat der ersten Anwendung oder der digitale Fingerabdruck des Signierzertifikats zu den Anwendungsdeskriptoren, unter der Bedingung, dass das Signierzertifikat der ersten Anwendung oder der digitale Fingerabdruck des Signierzertifikats mit den Anwendungsdeskriptoren übereinstimmt; oder
Bestimmen, dass das Signierzertifikat der ersten Anwendung oder der digitale Fingerabdruck des Signierzertifikats nicht zu den Anwendungsdeskriptoren passen, unter der Bedingung, dass das Signierzertifikat der ersten Anwendung oder der digitale Fingerabdruck des Signierzertifikats sich von den Anwendungsdeskriptoren unterscheidet.

9. Ein Benutzergerät, UE (50), umfassend:
eine Erlangungseinheit (501), die dazu eingerichtet ist, beim Durchführen einer Netzverbindung ein Signierzertifikat einer ersten Anwendung oder einen digitalen Fingerabdruck des Signierzertifikats zu erlangen; und
eine Verarbeitungseinheit (502), die dazu eingerichtet ist:
das Signierzertifikat der ersten Anwendung oder den digitalen Fingerabdruck des Signierzertifikats mit Anwendungsdeskriptoren in einer von einer Netzseite verteilten Regel einer Benutzergerät-Routenauswahlrichtlinie, URSP-Regel, abzugleichen und
eine Sitzung für die erste Anwendung zu erstellen,
**dadurch gekennzeichnet, dass**:
die erste Anwendung ein Signierzertifikat eines Entwicklers enthält,
die Anwendungsdeskriptoren in der URSP-Regel ein Netzwerksignierzertifikat der ersten Anwendung oder einen digitalen Fingerabdruck des Netzwerksignierzertifikats umfassen, das in einer Netzwerksignatur der ersten Anwendung enthalten ist, und
die Netzwerksignatur der ersten Anwendung durch erneutes Signieren der ersten Anwendung durch die Netzseite erhalten wird.

10. Das Benutzergerät nach Anspruch 9, ferner umfassend:
eine Kommunikationseinheit (503), die dazu konfiguriert ist, die erste Anwendung zu empfangen, wobei die erste Anwendung das Signierzertifikat der ersten Anwendung enthält.

11. Das Benutzergerät nach Anspruch 9, ferner umfassend:
eine Kommunikationseinheit (503), die dazu konfiguriert ist, die Anwendungsdeskriptoren in der von einem Betreiberserver verteilten URSP-Regel zu empfangen.

12. Das Benutzergerät nach Anspruch 9, wobei die Verarbeitungseinheit dazu konfiguriert ist:
zu bestimmen, dass das Signierzertifikat der ersten Anwendung oder der digitale Fingerabdruck des Signierzertifikats zu den Anwendungsdeskriptoren passen, unter der Bedingung, dass das Signierzertifikat der ersten Anwendung oder der digitale Fingerabdruck des Signierzertifikats mit den Anwendungsdeskriptoren übereinstimmen; oder
zu bestimmen, dass das Signierzertifikat der ersten Anwendung oder der digitale Fingerabdruck des Signierzertifikats nicht zu den Anwendungsdeskriptoren passen, unter der Bedingung, dass das Signierzertifikat der ersten Anwendung oder der digitale Fingerabdruck des Signierzertifikats sich von den Anwendungsdeskriptoren unterscheidet.

13. Das Benutzergerät nach Anspruch 9, wobei die Anwendungsdeskriptoren eine Betriebssystemkennung, OSId, und eine Betriebssystem-Anwendungskennung, OSAppld, umfassen.

14. Eine Vorrichtung (70), umfassend:
einen Prozessor (701);
einen Speicher (702);
eine Kommunikationsschnittstelle (703); und
ein oder mehrere Programme, die in dem Speicher gespeichert und dazu konfiguriert sind, von dem Prozessor ausgeführt zu werden;
wobei die Programme Weisungen umfassen, die dazu geeignet sind, die Operationen des Verfahrens nach einem der Ansprüche 1 bis 8 auszuführen.

15. Ein computerlesbares Speichermedium, das Computerprogramme für den elektronischen Datenaustausch speichert, wobei die Computerprogramme mit einem Computer betrieben werden können, um das Verfahren nach einem der Ansprüche 1 bis 8 auszuführen.

## Revendications

1. Un procédé de création de session, effectué par un équipement utilisateur, UE, comprenant :
l'acquisition (S200) d'un certificat de signature d'une première application ou d'une empreinte numérique du certificat de signature, lors de l'établissement d'une connexion réseau ;
la mise en correspondance (S201) du certificat de signature de la première application ou de l'empreinte numérique du certificat de signature avec des descripteurs d'application dans une règle de politique de sélection de route de trafic de l'équipement utilisateur, règle URSP, distribuée par le côté réseau ; et
la création (S201) d'une session pour la première application,
**caractérisé en ce que** :
la première application contient un certificat de signature d'un développeur,
les descripteurs d'application dans la règle URSP comprennent un certificat de signature réseau de la première application ou une empreinte numérique du certificat de signature du réseau qui est compris dans une signature réseau de la première application, et
la signature réseau de la première application est obtenue par une nouvelle signature, par le côtéréseau, de la première application.

2. Le procédé selon la revendication 1, dans lequel la session est une session d'unité de données de protocole, PDU.

3. Le procédé selon la revendication 1, dans lequel les descripteurs d'application sont des descripteurs d'application définis par un descripteur de trafic dans le protocole du projet de partenariat de 3e génération, 3GPP.

4. Le procédé selon la revendication 1, dans lequel les descripteurs d'application comprennent un identifiant de système d'exploitation, OSId, et un identifiant d'application du système d'exploitation, OSAppld.

5. Le procédé selon la revendication 1 ou 2, dans lequel, avant l'établissement d'une connexion réseau, le procédé comprend en outre :
la réception de la première application, dans lequel la première application contient le certificat de signature de la première application.

6. Le procédé selon la revendication 1, dans lequel l'empreinte numérique du certificat de signature de la première application est une chaîne de caractères chiffrée par un algorithme de chiffrement à sens unique.

7. Le procédé selon la revendication 1, comprenant en outre :
la réception des descripteurs d'application dans la règle URSP distribuée par un serveur d'opérateur.

8. Le procédé selon la revendication 1, dans lequel la mise en correspondance du certificat de signature de la première application ou de l'empreinte numérique du certificat de signature avec les descripteurs d'application dans la règle URSP distribuée par le côté réseau comprend :
la détermination du fait que le certificat de signature de la première application ou l'empreinte numérique du certificat de signature correspond aux descripteurs d'application, à condition que le certificat de signature de la première application ou l'empreinte numérique du certificat de signature soit conforme aux descripteurs d'application ; ou
la détermination du fait que le certificat de signature de la première application ou l'empreinte numérique du certificat de signature ne correspond pas aux descripteurs d'application, à condition que le certificat de signature de la première application ou l'empreinte numérique du certificat de signature soit différent des descripteurs d'application.

9. Un équipement utilisateur, UE (50), comprenant :
une unité d'acquisition (501), configurée pour acquérir un certificat de signature d'une première application ou une empreinte numérique du certificat de signature lors de l'établissement d'une connexion réseau ; et
une unité de traitement (502), configurée pour :
mettre en correspondance le certificat de signature de la première application ou l'empreinte numérique du certificat de signature avec des descripteurs d'application dans une règle de politique de sélection de route de trafic de l'équipement utilisateur, règle URSP, distribuée par le côté réseau, et
créer une session pour la première application,
**caractérisé en ce que** :
la première application contient un certificat de signature d'un développeur,
les descripteurs d'application dans la règle URSP comprennent un certificat de signature du réseau de la première application ou une empreinte numérique du certificat de signature du réseau qui est compris dans une signature réseau de la première application, et
la signature réseau de la première application est obtenue par une nouvelle signature, par le côté réseau, de la première application.

10. L'équipement utilisateur selon la revendication 9, comprenant en outre :
une unité de communication (503), configurée pour recevoir la première application, dans lequel la première application contient le certificat de signature de la première application.

11. L'équipement utilisateur selon la revendication 9, comprenant en outre :
une unité de communication (503), configurée pour recevoir les descripteurs d'application dans la règle URSP distribuée par un serveur d'opérateur.

12. L'équipement utilisateur selon la revendication 9, dans lequel l'unité de traitement est configurée pour :
déterminer que le certificat de signature de la première application ou l'empreinte numérique du certificat de signature correspond aux descripteurs d'application, à la condition selon laquelle le certificat de signature de la première application ou l'empreinte numérique du certificat de signature est conforme aux descripteurs d'application ; ou
déterminer que le certificat de signature de la première application ou l'empreinte numérique du certificat de signature ne correspond pas aux descripteurs d'application, à la condition selon laquelle le certificat de signature de la première application ou l'empreinte numérique du certificat de signature est différent des descripteurs d'application.

13. L'équipement utilisateur selon la revendication 9, dans lequel les descripteurs d'application comprennent un identifiant de système d'exploitation, OSId, et un identifiant d'application du système d'exploitation, OSAppld.

14. Un équipement (70), comprenant :
un processeur (701) ;
une mémoire (702) ;
une interface de communication (703) ; et
un ou plusieurs programmes, stockés dans la mémoire et configurés pour être exécutés par le processeur ;
les programmes comprenant des instructions qui sont aptes à exécuter les opérations du procédé selon l'une quelconque des revendications 1 à 8.

15. Un support de stockage lisible par ordinateur stockant des programmes informatiques pour l'échange électronique de données, les programmes informatiques étant aptes, avec un ordinateur, à exécuter le procédé selon l'une quelconque des revendications 1 à 8.
